# FASCICULE DE BREVET EUROPEEN

(11) **EP 0 697 591 B1**
(45) Date de publication et mention de la délivrance du brevet: **31.05.2000**
(21) Numéro de dépôt: 95870090.8
(22) Date de dépôt: 20.07.1995
(51) Int. Cl.: G01N 21/88, G01B 11/30

(54) **Dispositif pour l'inspection de la surface d'un cylindre de laminoir**
Vorrichtung zur Kontrolle der Oberfläche einer Walzwerkwalze
Inspecting device for rolling mill roll surface

(30) Priorité: 09.08.1994 BE 9400733
(43) Date de publication de la demande: 21.02.1996
(73) Titulaire: CENTRE DE RECHERCHES METALLURGIQUES a.s.b.l., CENTRUM VOOR RESEARCH IN DE METALLURGIE v.z.w., B-1040 Bruxelles (BE)
(72) Inventeur: Pirlet, Robert, B-4053 Embourg (BE); Franssen, Roger, B-4850 Montzen (BE)
(74) Mandataire: Lacasse, Lucien Emile

(56) Documents cités:
- EP-A- 0 547 227
- DE-A- 3 610 160
- FR-A- 2 610 407
- US-A- 5 046 347
- PATENT ABSTRACTS OF JAPAN vol. 009 no. 281 (P-403),8 Novembre 1985 & JP-A-60 122302 (MITSUBISHI JUKOGYO KK) 29 Juin 1985
- PATENT ABSTRACTS OF JAPAN vol. 014 no. 078 (P-1006),14 Février 1990 & JP-A-01 295108 (KAWASAKI STEEL CORP) 28 Novembre 1989
- PATENT ABSTRACTS OF JAPAN vol. 015 no. 124 (M-1097),26 Mars 1991 & JP-A-03 013281 (KOBE STEEL LTD) 22 Janvier 1991

## Description

La présente invention concerne un dispositif pour l'inspection de la surface d'un cylindre de laminoir, en particulier d'un cylindre de travail d'un laminoir à bandes.

L'état de surface des cylindres de laminoir, tels que les cylindres de travail des cages finisseuses d'un train de laminoir à bandes, influence fortement la qualité des bandes destinées par exemple à la fabrication de tôles de carrosserie automobile. Au cours du laminage, la surface des cylindres se dégrade progressivement par oxydation, par incrustation de particules d'oxydes, par fissuration due aux chocs thermiques ou encore par arrachement de pellicules sous l'effet des contraintes superficielles.

Il importe en conséquence d'inspecter régulièrement la surface des cylindres, en particulier des cylindres de travail inférieurs dont l'usure est spécialement rapide, afin de déceler aussi tôt que possible les défauts susceptibles de compromettre la qualité des produits laminés.

Actuellement, l'inspection de la surface des cylindres de travail nécessite l'arrêt du laminoir et quelquefois même le démontage des cylindres. Compte tenu de la vitesse d'usure élevée des cylindres, ces arrêts sont fréquents et ils influencent défavorablement la productivité des trains de laminoir et par conséquent le prix de revient des produits laminés. De plus, l'inspection se résume fréquemment à un simple examen visuel pratiqué par l'opérateur; il peut donc subsister des incertitudes sur l'état de la surface, en raison du caractère subjectif de cet examen.

On connaît certes des appareils, tels que des caméras CCD, qui sont en principe capables d'effectuer de manière correcte et fiable l'inspection de la surface d'un cylindre de travail. La difficulté réside dans la mise en place et l'utilisation d'une telle caméra dans l'espace réduit dispopnible et dans l'atmosphère perturbée qui règne dans les trains de laminoir, à proximité des cylindres à inspecter.

En effet, il reste généralement très peu d'espace libre à proximité des cylindres de travail, en particulier du cylindre de travail inférieur, parce qu'il y est prévu notamment des dispositifs de refroidissement et de lubrification du cylindre. Ces dispositifs envoient respectivement des jets d'eau et des jets d'huile sur la surface du cylindre, et il en résulte des projections d'eau et d'huile qui créent localement une atmosphère peu propice à l'observation de la surface.

De plus, l'usure du cylindre provoque une diminution de son diamètre, et par conséquent une augmentation de la distance entre cette surface et la tête de visée de la caméra. Il est dès lors nécessaire d'augmenter l'éclairement de la surface pour tenter de compenser l'effet de cette variation de la distance et de réajuster la mise au point de l'objectif.

La plupart des cages finisseuses sont actuellement équipées d'un racloir monté, à l'amont du cylindre de travail, sur un bras pivotant articulé au bâti de la cage. Ce racloir en matière semi-rigide est appliqué sur la surface du cylindre, entre les jets d'eau de refroidissement et les jets d'huile de lubrification. Il sert essentiellement à empêcher l'entraînement d'eau dans la zone de lubrification. Grâce à son support articulé, ce racloir reste appliqué en permanence sur la surface du cylindre, même lorsque le diamètre de celui-ci diminue par suite de l'usure.

EP-A-0 547 227 divulgue un appareil d'inspection de la surface d'un cylindre de laminoir. L'appareil est porté par un bras horizontal commandé par un vérin pneumatique, qui permet soit de l'approcher soit de le retirer. La tête de visée de l'appareil comporte un garant, qui n'est pas en contact avec la surface du cylindre.

La présente invention a pour objet de proposer un arrangement particulier permettant d'installer et d'utiliser un appareil d'inspection, tel qu'une caméra CCD, à proximité immédiate du cylindre de travail inférieur d'une cage de laminoir sans perturber le fonctionnement de celle-ci et notamment le refroidissement et la lubrification du cylindre.

Conformément à la présente invention, un dispositif d'inspection de la surface du cylindre de travail inférieur d'une cage de laminoir qui comporte, le long dudit cylindre, un support articulé portant un racloir s'appuyant sur la surface dudit cylindre, est caractérisé en ce qu'au moins un appareil d'inspection de la surface dudit cylindre est fixé audit support articulé, de telle façon que sa tête de visée soit située sous le racloir à proximité immédiate de la surface dudit cylindre.

L'appareil d'inspection, généralement une caméra, doit être de petite taille, afin de ne pas perturber les jets d'eau de refroidissement. Il est de préférence logé dans un boîtier étanche, qui est lui-même fixé sous la tablette du support articulé portant le racloir, de telle façon que l'axe optique dudit appareil d'inspection coïncide sensiblement avec un diamètre dudit cylindre, c'est-à-dire coupe sensiblement l'axe dudit cylindre quel que soit le diamètre de celui-ci.

Suivant une forme de réalisation particulière, il est prévu des moyens pour injecter un liquide de refroidissement dans l'espace compris entre la tête de visée dudit appareil et la surface dudit cylindre.

A cet égard, le boîtier étanche peut être pourvu d'une arrivée d'eau et d'un orifice de sortie de l'eau disposé en face du hublot de visée de la caméra. Ce hublot de visée, respectivement l'orifice de sortie du boîtier, est avantageusement équipé d'une manchette semi-rigide, par exemple en matière plastique de type nylon, pour éviter d'endommager aussi bien l'appareil d'inspection que la surface du cylindre en cas de contact avec cette dernière. L'eau en circulation assure la propreté du hublot de la caméra et de l'orifice de sortie du boîtier et en plus, dans la mesure où son écoulement est laminaire, elle permet de viser la surface du cylindre dans des conditions d'inspection reproductibles.

Suivant une variante intéressante, la caméra, respectivement le boîtier qui la contient, peut être animée d'un mouvement de translation transversal par rapport à la direction de laminage, par exemple par déplacement sur une glissière fixée au support du racloir précité. Il est ainsi possible d'inspecter en permanence une partie ou la totalité de la surface du cylindre de travail pendant son utilisation.

Le dispositif de l'invention sera maintenant décrit de façon plus détaillée à l'aide d'un exemple de réalisation, illustré par les dessins annexés dans lesquels la
- Fig. 1: montre l'arrangement de l'appareil d'inspection à proximité du cylindre de travail inférieur d'une cage de laminoir; et la
- Fig. 2: le montage d'une caméra dans un boîtier étanche comportant un circuit d'eau de refroidissement.

Ces deux figures sont des représentations schématiques, dans lesquelles on n'a reproduit que les éléments nécessaires à la compréhension de l'invention. Des éléments identiques ou analogues sont désignés par les mêmes repères numériques dans les deux figures, et le sens de circulation des fluides, y compris des rayons lumineux, est indiqué par des flèches.

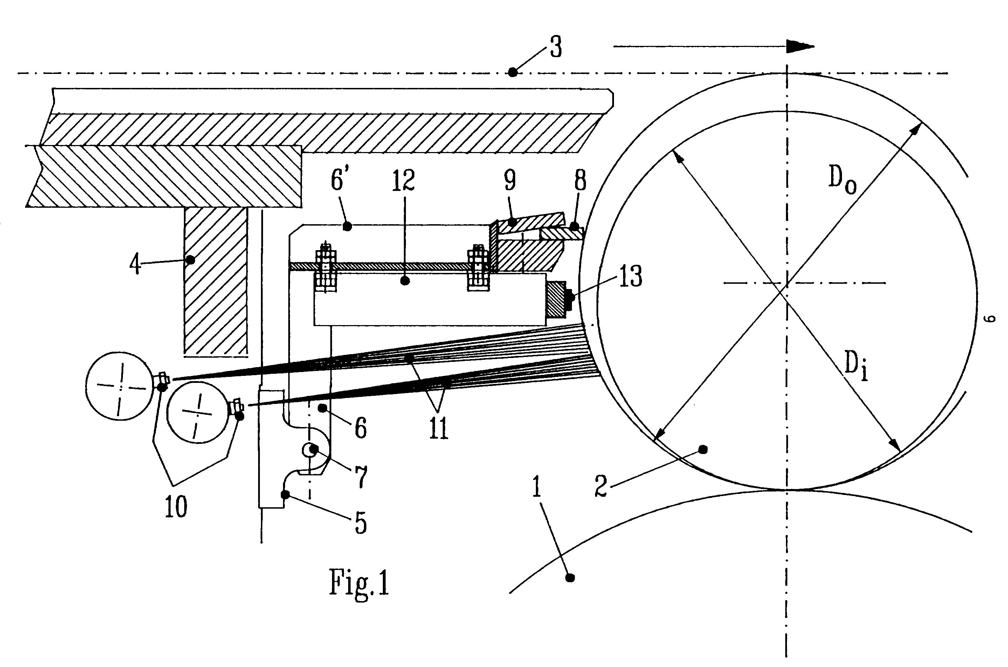

La Fig. 1 représente une vue latérale fragmentaire d'une cage finisseuse d'un laminoir à bandes, avec un cylindre d'appui inférieur 1, un cylindre de travail inférieur 2, la ligne de passe 3 et quelques éléments du bâti 4 de la cage. A ce bâti 4 est fixée une chaise 5 sur laquelle un bras coudé 6 peut pivoter par une articulation 7.

Le bras coudé 6 comporte une partie sensiblement horizontale 6' dirigée vers le cylindre de travail 2 et portant à son extrémité un racloir 8 serré dans une mâchoire 9. Ce racloir 8 est l'élément par lequel le bras coudé 6 prend appui sur le cylindre de travail 2.

Des groupes de gicleurs 10 disposés dans le bâti 4 envoyent des jets d'eau 11 sur la surface du cylindre de travail 2, à une certaine distance sous le point de contact du cylindre de travail 2 avec le racloir 8. En règle générale, des gicleurs non représentés projettent des jets d'huile de lubrification sur le cylindre de travail 2 au-dessus du racloir 8.

Suivant la disposition proposée par la présente invention, un boîtier 12 contenant une caméra d'inspection est fixé à la face inférieure de la partie sensiblement horizontale 6' du bras coudé 6. Le boîtier étanche 12 est dimensionné et disposé de façon à ne pas perturber les jets d'eau 11. On peut également voir dans la Fig. 1 une manchette de protection 13 sortant du boîtier 12 à proximité du cylindre de travail 2. Cette manchette 13, en matière semi-rigide, protège le boîtier 12, respectivement la tête de la caméra, lors d'un éventuel contact avec la surface du cylindre 2 en cas d'usure importante ou de rupture du racloir 8.

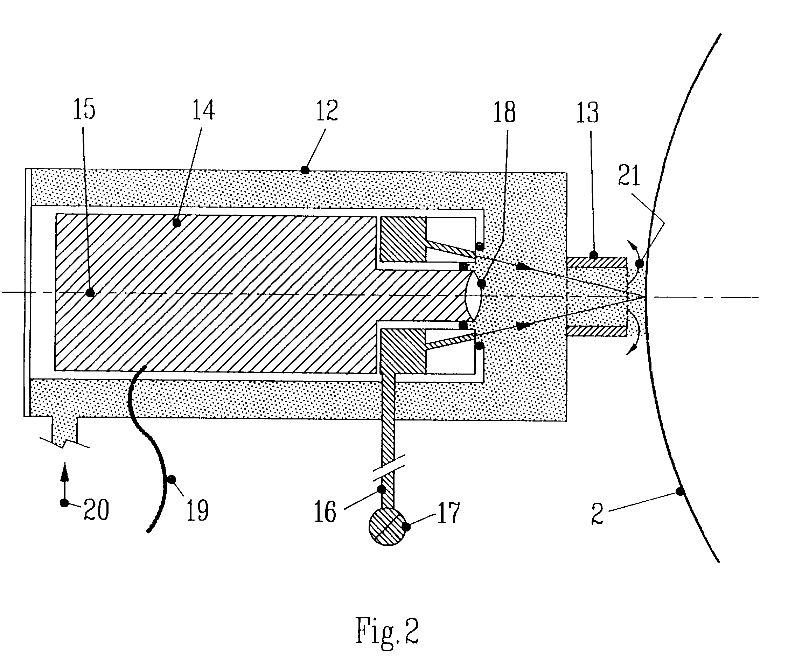

La Fig. 2 illustre de façon plus détaillée la position du boîtier 12 avec la manchette de protection 13 par rapport au cylindre de travail 2. De façon connue en soi, le boîtier 12 contient une caméra 14, dont l'axe de visée 15 est dirigé radialement vers la surface du cylindre à inspecter.

Dans l'exemple illustré, l'objectif de la caméra est entouré par des fibres optiques 16 raccordées à une source de lumière extérieure 17, par exemple une lampe au xénon émettant des impulsions lumineuses de 25 µs avec une fréquence de 20 Hz.

Ces impulsions lumineuses sont envoyées sur la surface du cylindre 2 sous un angle prédéterminé et la lumière réfléchie, captée par la lentille 18 de la caméra, est transformée en un signal électrique qui est transmis à un appareil de visualisation, non représenté, par un câble approprié 19. Le boîtier 12 est muni d'un circuit de refroidissement à l'eau, dans lequel l'eau entre par la flèche 20 et dont elle sort par les flèches 21, c'est-à-dire en s'échappant par la manchette 13. Le logement proprement dit de la caméra est isolé du circuit de refroidissement par des joints toriques.

Au cours du temps d'utilisation et des rectifications successives, le cylindre de travail subit une usure normale et progressive, qui fait passer son diamètre d'une valeur initiale D₀ à une valeur instantanée Dᵢ inférieure à D₀, comme le montre la Fig. 1. Pour ne pas surcharger inutilement le dessin, on n'a pas représenté le racloir 8 dans sa position déplacée sur le cylindre 2 usé au diamètre Dᵢ, cette position se conçoit cependant aisément puisqu'elle résulte d'une simple rotation autour de l'articulation 7. Quel que soit le degré d'usure, le racloir 8 reste normalement en contact avec la surface du cylindre 2. A cet égard, il est préférable que la distance entre la manchette 13 et la surface du cylindre 2 soit au moins égale à la longueur d'usure maximale dudit racloir, de façon à éviter un contact de la manchette 13 avec le cylindre 2 avant que le racloir 8 soit usé et doive être remplacé.

Il s'avère cependant avantageux que la distance entre la manchette 13 et la surface du cylindre 2 soit limitée, par exemple à un maximum d'environ 15 mm, afin de pouvoir maintenir un coussin d'eau à la sortie du boîtier 12; de plus, il est préférable de régler le débit de l'eau de telle façon que son écoulement soit aussi laminaire que possible dans la manchette pour que les inspections puissent se dérouler dans des conditions reproductibles et comparables.

Du fait de l'appui du racloir sur la surface du cylindre, la distance entre la tête de visée de l'appareil d'inspection et cette surface est en principe constante; dans la pratique, cette distance peut être considérée comme étant sensiblement constante, car elle ne varie que très lentement, en fonction de l'usure du racloir, quel que soit le diamètre du cylindre.

Le présent arrangement d'un dispositif d'inspection dans une cage de laminoir permet d'examiner en continu au moins une partie de la surface du cylindre en cours d'utilisation, et de fournir instantanément à un opérateur des informations précises sur l'état de surface de ce cylindre.

## Revendications

1. Dispositif pour l'inspection de la surface d'un cylindre de travail (2) d'une cage de laminoir qui comporte, le long dudit cylindre, un support articulé (6) portant un racloir (8) s'appuyant sur la surface dudit cylindre, caractérisé en ce qu'au moins un appareil (14) d'inspection de la surface dudit cylindre est fixé audit support articulé, de telle façon que sa tête de visée soit située sous le racloir à proximité immédiate de la surface dudit cylindre.

2. Dispositif d'inspection suivant la revendication 1, caractérisé en ce que ledit appareil d'inspection (14) est logé dans un boîtier étanche (12) et en ce que ce boîtier (12) est fixé audit support articulé (6) de telle façon que l'axe optique (15) dudit appareil d'inspection (14) coïncide sensiblement avec un diamètre dudit cylindre (2).

3. Dispositif d'inspection suivant l'une ou l'autre des revendications 1 et 2, caractérisé en ce qu'il comporte des moyens pour injecter un liquide de refroidissement dans l'espace compris entre la tête de visée dudit appareil d'inspection (14) et la surface dudit cylindre (2).

4. Dispositif d'inspection suivant l'une ou l'autre des revendications 1 à 3, caractérisé en ce que la tête de visée de la caméra (14), respectivement l'orifice de sortie du boîtier (12), est équipé(e) d'une manchette semi-rigide (13).

5. Dispositif d'inspection suivant l'une ou l'autre des revendications 1 à 4, caractérisé en ce que ledit appareil d'inspection (14), respectivement ledit boîtier (12), est animé d'un mouvement de translation transversal par rapport à la direction de laminage.

6. Dispositif d'inspection suivant l'une ou l'autre des revendications 1 à 5, caractérisé en ce que la distance initiale entre la manchette (13) et la surface du cylindre (2) est au moins égale à la longueur d'usure maximale dudit racloir (8).

7. Dispositif d'inspection suivant l'une ou l'autre des revendications 1 à 5, caractérisé en ce que la distance entre la manchette (13) et la surface du cylindre (2) est inférieure ou égale à 15 mm.

## Patentansprüche

1. Vorrichtung für die Sichtkontrolle der Oberfläche eines Arbeitszylinders (2) eines Walzgerüsts, das längs dieses Zylinders eine gelenkig gelagerte Halterung umfaßt, die einen Abstreifer (8) trägt, der auf der Oberfläche dieses Zylinders aufliegt, dadurch gekennzeichnet, daß mindestens ein Apparat (14) zur Sichtkontrolle der Oberfläche dieses Zylinders an der gelenkig gelagerten Halterung so befestigt ist, daß sein Sehkopf unter dem Abstreifer in unmittelbarer Nähe der Oberfläche dieses Zylinders angeordnet ist.

2. Sichtkontrolle-Vorrichtung gemäß Anspruch 1, dadurch gekennzeichnet, daß der Sichtkontrolle-Apparat (14) in einem dichten Gehäuse (12) untergebracht ist, und daß dieses Gehäuse (12) an der gelenkig gelagerten Halterung (6) so befestigt ist, daß die optische Achse (15) des Sichtkontrolle-Apparates (14) im wesentlichen mit einem Durchmesser des Zylinders (2) zusammenfällt.

3. Sichtkontrolle-Vorrichtung gemäß irgendeinem der Ansprüche 1 und 2, dadurch gekennzeichnet, daß sie Mittel umfaßt, um eine Kühlflüssigkeit in den Zwischenraum zwischen dem Sehkopf des Sichtkontrolle-Apparates (14) und der Oberfläche des Zylinders (2) einzuspritzen.

4. Sichtkontrolle-Vorrichtung gemäß irgendeinem der Ansprüche 1 bis 3, dadurch gekennzeichnet, daß der Sehkopf der Kamera (14) bzw. die Ausgangsöffnung des Gehäuses (12) mit einer halbstarren Manschette (13) ausgerüstet ist.

5. Sichtkontrolle-Vorrichtung gemäß irgendeinem der Ansprüche 1 bis 4, dadurch gekennzeichnet, daß der Sichtkontrolle-Apparat (14) bzw. das Gehäuse (12) eine transversale Translationsbewegung bezüglich der Walzrichtung ausführt.

6. Sichtkontrolle-Vorrichtung gemäß irgendeinem der Ansprüche 1 bis 5, dadurch gekennzeichnet, daß der anfängliche Abstand zwischen der Manschette (13) und der Oberfläche des Zylinders (2) mindestens gleich der maximalen Abnutzungslänge des Abstreifers (8) ist.

7. Sichtkontrolle-Vorrichtung gemäß irgendeinem der Ansprüche 1 bis 5, dadurch gekennzeichnet, daß der Abstand zwischen der Manschette (13) und der Oberfläche des Zylinders (2) kleiner oder gleich 15 mm ist.

## Claims

1. Device for inspecting the surface of a working roll (2) in a roll stand comprising, along said roll, a hinged support (6) carrying a scraper (8) bearing on the surface of said roll, characterized in that at least an inspecting apparatus (15) for the surface of said roll is secured to said hinged support so that the sighting head thereof is located under the scraper at immediate proximity of the surface of said roll.

2. Inspecting device according to claim 1, characterized in that said inspection apparatus (14) is accommodated inside a sealing housing (12) and said housing (12) is secured to said hinged support (6) so that the optical axis (15) of said inspection apparatus (14) is substantially matched with a diameter of said roll (2).

3. Inspecting device according to any of claims 1 and 2, characterized in that it comprises means for injecting a cooling liquid in the space comprised between the sighting head of said inspection apparatus (14) and the surface of said roll (2).

4. Inspection device according to any of claims 1 to 3, characterized in that the sighting head of the camera (14), respectively the output hole of the housing (12), is provided with a semi-rigid sleeve.

5. Inspection device according to any of claims 1 to 4, characterized in that said inspection apparatus (14), respectively said housing (12), is submitted to a transversal translation movement with respect to the rolling direction.

6. Inspection device according to any of claims 1 to 5, characterized in that the initial distance between the sleeve (13) and the surface of the roll (2) is at least equal to the maximal wear length of said scraper (8).

7. Inspection device according to any of claims 1 to 5, characterized in that the distance between the sleeve (13) and the surface of the roll (2) is lower than or equal to 15 mm.
